(19) Europäisches Patentamt
European Patent Office
Office européen des brevets

(11) EP 1 980 900 A1

(12) EUROPEAN PATENT APPLICATION

(43) Date of publication:
15.10.2008 Bulletin 2008/42

(51) Int Cl.:
$G02F\ 1/1335^{(2006.01)}$     $G02B\ 5/30^{(2006.01)}$

(21) Application number: 08152763.2

(22) Date of filing: 14.03.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 13.04.2007 KR 20070036621

(71) Applicant: Samsung Electronics Co., Ltd.
Suwon-si
Gyeonggi-do 443-742 (KR)

(72) Inventors:
• Kim, Guk-hyun
c/o Samsung Advanced Institute of Technology
Gyeonggi-do (KR)
• Lee, Soo-mi
c/o Samsung Advanced Institute of Technology
Gyeonggi-do (KR)

(74) Representative: Greene, Simon Kenneth
Elkington and Fife LLP
Prospect House
8 Pembroke Road
Sevenoaks, Kent TN13 1XR (GB)

(54) **Nano wire grid polarizer and liquid crystal display apparatus employing the same**

(57) Provided are a nano wire grid polarizer and a liquid crystal display apparatus. The nano wire grid polarizer transmits light having a first polarization and reflects light having a second polarization. The polarizer includes a dielectric layer, and a plurality of nano wire array layers, each of the plurality of nano wire layers comprising a plurality of nano wires which are arranged in parallel to each other and spaced at regular intervals. The plurality of nano wire array layers are stacked to be spaced apart one another.

FIG. 4A

EP 1 980 900 A1

**Description**

BACKGROUND OF THE INVENTION

Apparatuses consistent with the present invention relate to a wire grid polarizer which transmits and reflects light according to polarization directions thereof, and more particularly, to a wire grid polarizer having nano wires that has good light efficiency and contrast ratio and can be manufactured to have a large area and can be mass-produced, and a liquid crystal display apparatus employing the wire grid polarizer.

Polarization characteristics of light are used in many applications to conveniently control light emitted from light sources. For example, in the case of a liquid crystal display apparatus using a liquid crystal panel, the liquid crystal panel operates as a shutter to change a polarized orientation of light so as to transmit or intercept light, and thus the liquid crystal display apparatus uses only light polarized in one direction. However, in general, light emitted from a light source is non-polarized light. Polarizers are provided on both surfaces of a liquid crystal display apparatus. Wire grid polarizers (hereinafter, referred to as a "WGPs") can be used as polarizers in a liquid crystal display apparatus.

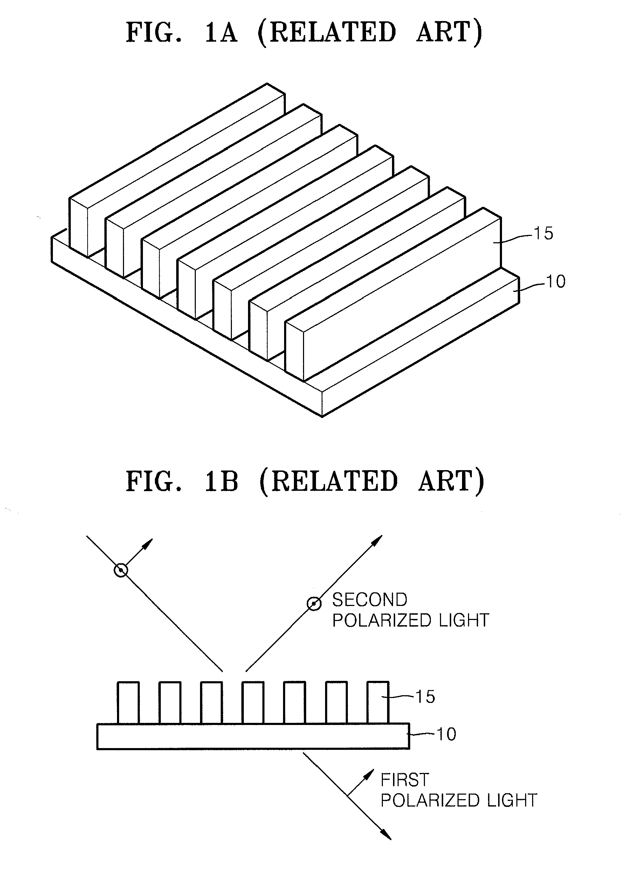

WGPs are configured such that metal wires are periodically arranged in parallel to one another on a substrate. FIGS. 1A and 1B are a perspective view and a cross-sectional view of a related art WGP, respectively. When the pitch of metal wires 15 of the related art WGP is less than the wavelength of incident light thereon, diffraction does not occur and thus the related art WGP can act as a polarizer. In detail, the related art WGP transmits first polarized light having an electric field which is perpendicular to the metal wires 15 and reflects second polarized light having an electric field which is parallel to the metal wires 15.

Since the WGP transmits the first polarized light and reflects the second polarized light, WGPs are mainly used in liquid crystal display apparatuses. While a WGP, theoretically, transmits 100% of the first polarized light and reflects 100% of the second polarized light, in practice, a WGP reflects part of the first polarized light and transmits part of the second polarized light. When the transmittance of the first polarized light, the reflectance of the second polarized light, and the ratio of the transmittance of the first polarized light to the transmittance of the second polarized light are T, R, and CR, respectively, the transmittance T of the first polarized light and the reflectance R of the second polarized light are important factors in determining light use efficiency, and the contrast ratio (CR) of the transmittance of the first polarized light divided by the transmittance of the second polarized light is an important factor in determining image quality, for example, as measured in a contrast ratio. When the values of T, R, and CR increase, the display performance also increases.

An absorbing polarizing plate typically used in an LCD transmits one direction of polarized light and absorbs other polarized light from unpolarized light emitted from a light source and incident on the absorbing polarizing plate. Accordingly, at least half of the light is lost, thereby reducing light use efficiency. In addition, when some of the light to be transmitted is also absorbed, light loss is further increased. However, a WGP does not absorb polarized light, which does not need to be transmitted, but rather reflects the polarized light and then recycles the same again, thereby improving light use efficiency as compared with the absorbing polarizing plate.

Referring to FIG. 1A, the WGP includes a transparent substrate 10 and a metal wires 15 arranged in parallel to one another on the transparent substrate 10. The cross-sectional view of the WGP illustrated in FIG. 1B is for explaining the operation of the WGP. When unpolarized light is incident on the WGP, first polarized light is transmitted through the wires 15 and second polarized light is reflected by the metal wires 15.

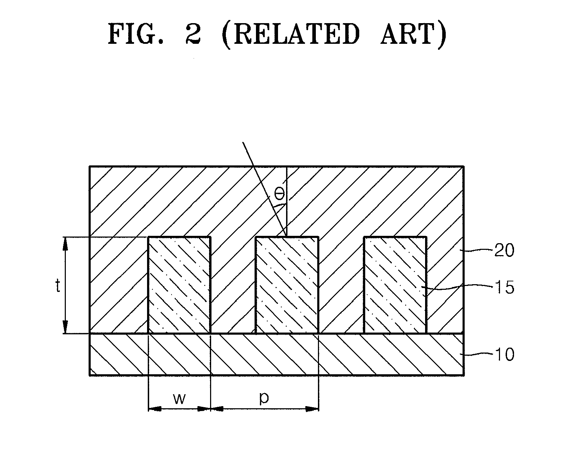

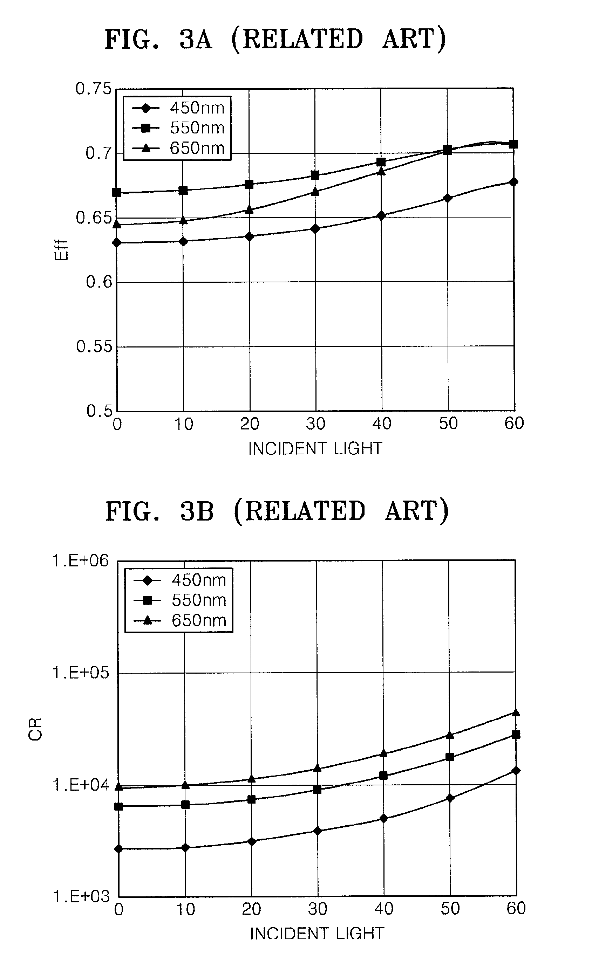

When the WGP is actually used for a system, the WGP may be configured in a structure in which a dielectric material 20 surrounds the peripheral metal wires 15, as illustrated in FIG. 2 so that the metal wires 15 of the WGP may not be exposed to air in order to prevent the corrosion of the metal wires 15 having a fine width and protect the metal wires 15 from physical impact. Here, the pitch of the wire grid is p, the width of the metal wires 15 is w, the thickness of the metal wires 15 is t, and the angle of incident light is θ. The metal wires 15 are formed of aluminum, and the refractive indexes of the dielectric material 20 and transparent substrate 10 are each 1.5. Under the conditions of p=100 nm, w=50 nm and t=120 nm, when the wavelengths of incident light are 450 nm, 550 nm and 650 nm, the light efficiency Eff with respect to the angle of incident light θ is illustrated in FIG. 3A. The detailed descriptions of the light efficiency Eff will be provided later. The CR of the transmittance of the first polarized light divided by the transmittance of the second polarized light is illustrated in FIG. 3B. The refractive index of the metal wires 15 is shown in Table 1.

TABLE 1

| The refractive index of aluminum: | | |
|---|---|---|
| Wavelength | Real part of refractive index (n) | Imaginary part of refractive index (k) |
| 450 nm | 0.618 | 5.47 |
| 550 nm | 0.958 | 6.69 |

(continued)

| The refractive index of aluminum: | | |
| --- | --- | --- |
| Wavelength | Real part of refractive index (n) | Imaginary part of refractive index (k) |
| 650 nm | 1.47 | 7.79 |

Referring to FIGS. 3A and 3B, when an angle of incident light is in the range of 0 to 60 degrees, effects of Eff>0.63 and CR>2600 can be seen. However, when a wire grid polarizer has such a structure, linear wire patterns are formed to have an arrangement period, in which a width between lines is smaller than the wavelength of light. For example, the arrangement period of linear wire patterns should be smaller than 200 nm in order to embody an WGP for use with visible rays. Such fine patterns can be usually formed using electron-beam lithograph or nano-imprint lithography. However, since the maximum size of a WGP manufactured using such methods is 8 inches x 8 inches, there is a problem in that it is difficult to mass produce such apparatuses having a large size.

SUMMARY OF THE INVENTION

Exemplary embodiments of the present invention provide a nano wire polarizer using nano wires that can be manufactured to have a large area and can be mass-produced, and has good light efficiency and contrast ratio.

The present invention also provides a liquid crystal display apparatus that includes the nano wire polarizer to provide good light efficiency and contrast ratio, and improved production.

According to an aspect of the present invention, there is provided a nano wire grid polarizer which transmits visible light having a first polarization and reflects visible light having a second polarization, the polarizer including: a dielectric layer; and a plurality of nano wire array layers. Each nano wire array layer includes parallel nano wires which are spaced at regular intervals, wherein the plurality of nano wire array layers are stacked spaced apart from one another.

The nano wires may be each formed of a metal.

The nano wires may be each formed of any one selected from the group consisting of aluminum, silver, gold, copper and nickel.

The nano wires may each have a round, an oval or a quadrangular cross-sectional shape.

According to another aspect of the present invention, there is provided a nano wire grid polarizer which transmits visible light having a first polarization and reflects visible light having a second polarization, the polarizer including: a substrate; and a plurality of nano wire array layers each of which is disposed on the substrate. Each layer includes a plurality of parallel core-shell nano wires arranged at regular intervals , wherein the plurality of nano wire array layers are stacked. Each core-shell nano wire comprises a wire core and a shell surrounding the core.

The shell may be formed of a dielectric material.

A ratio of a diameter of the wire core and a diameter of each of the core-shell nano wires may be in the range of 0.4 to 0.7.

A distance between a bottom of a core of a lowermost layer of the plurality of core-shell nano wire array layers and a top of a core of the highest layer of the plurality of core-shell nano wire array layers may be in the range of 96 to 400 nm.

When the nano wire grid polarizer is viewed cross-sectionally, the core-shell nano wires may be arranged in a periodical triangular lattice or a periodical tetragonal lattice.

According to another aspect of the present invention, there is provided a liquid crystal display apparatus including: a backlight which emits light; a nano wire grid polarizer which transmits visible light having a first polarization and reflects visible light having a second polarization; a liquid crystal panel which forms an image using the light transmitted through the nano wire grid polarizer, and may include: a dielectric layer; and a plurality of nano wire array layers. Each nano wire array layer includes a plurality of parallel nano wires spaced at regular intervals, and the plurality of nano wire array layers may be stacked to be spaced apart one another.

According to another aspect of the present invention, there is provided a liquid crystal display apparatus including: a backlight which emits light; a nano wire grid polarizer which transmits visible light having a first polarization and reflects visible light having a second polarization; a liquid crystal panel which forms an image using the light transmitted through the nano wire grid polarizer. The polarizer may include: a substrate; and a plurality of nano wire array layers disposed on the substrate. Each nano wire array layer may include a plurality of parallel core-shell nano wires, each comprising a wire core and a shell surrounding the wire core, arranged at regular intervals, and the plurality of nano wire array layers may be stacked.

BRIEF DESCRIPTION OF THE DRAWINGS

The above and other aspects of the present invention will become more apparent by describing in detail exemplary embodiments thereof with reference to the attached drawings in which:

FIG. 1A is a perspective view of a related art WGP;
FIG. 1B is a cross-sectional view of the related art WGP of FIG. 1A;
FIG. 2 is a cross-sectional view of a related art WGP surrounded by a dielectric material;
FIG. 3A is a graph illustrating light efficiency according to an angle of incident light of the related art WGP of FIG. 2, with respect to various wavelengths;
FIG. 3B is a graph illustrating a value CR of the transmittance of first polarized light divided by transmittance of second polarized light according to an angle of incident light on the related art WGP of FIG. 2, with respect to various wavelengths;
FIG. 4A is a perspective view of a nano wire grid polarizer according to an exemplary embodiment of the present invention;
FIG. 4B is a cross-sectional view of FIG. 4A;
FIG. 4C is a view of a nano wire grid polarizer including wires having a modified arrangement, according to another exemplary embodiment of the present invention;
FIG. 5 is a perspective view of a nano wire grid polarizer according to another exemplary embodiment of the present invention;
FIG. 6 illustrates a structure in which core-shell nano wires illustrated in FIG. 5 are arranged in a dielectric material;
FIG. 7 is a schematic view illustrating a liquid crystal display apparatus employing a nano wire grid polarizer, according to an exemplary embodiment of the present invention;
FIG. 8A is a graph illustrating light efficiency of a first example with respect to various wavelengths;
FIG. 8B is a graph illustrating a value of the transmittance of first polarized light divided by transmittance of second polarized light according to an angle of incident light in a first example, with respect to various wavelengths;
FIG. 9A is a graph illustrating light efficiency in a second example with respect to various wavelengths;
FIG. 9B is a graph illustrating a value of the transmittance of first polarized light divided by transmittance of second polarized light according to an angle of incident light in a second example, with respect to various wavelengths;
FIG. 10A is a graph illustrating light efficiency in a third example with respect to various wavelengths;
FIG. 10B is a graph illustrating a value of the transmittance of first polarized light divided by transmittance of second polarized light according to an angle of incident light in a third example, with respect to various wavelengths;
FIG. 11A is a graph illustrating light efficiency of a fourth example with respect to various wavelengths;
FIG. 11B is a graph illustrating a value of the transmittance of first polarized light divided by transmittance of second polarized light according to an angle of incident light in a fourth example, with respect to various wavelengths;
FIG. 12A is a graph illustrating light efficiency in a fifth example with respect to various wavelengths; and
FIG. 12B is a graph illustrating a value of the transmittance of first polarized light divided by transmittance of second polarized light according to an angle of incident light in a fifth example, with respect to various wavelengths.

DETAILED DESCRIPTION OF EXEMPLARY

EMBODIMENTS OF THE INVENTION

Exemplary embodiments of the present invention will now be described more fully with reference to the accompanying drawings. The invention may, however, be embodied in many different forms and should not be construed as being limited to the embodiments set forth herein; rather, these embodiments are provided so that this disclosure will be thorough and complete, and will fully convey the concept of the invention to those skilled in the art.

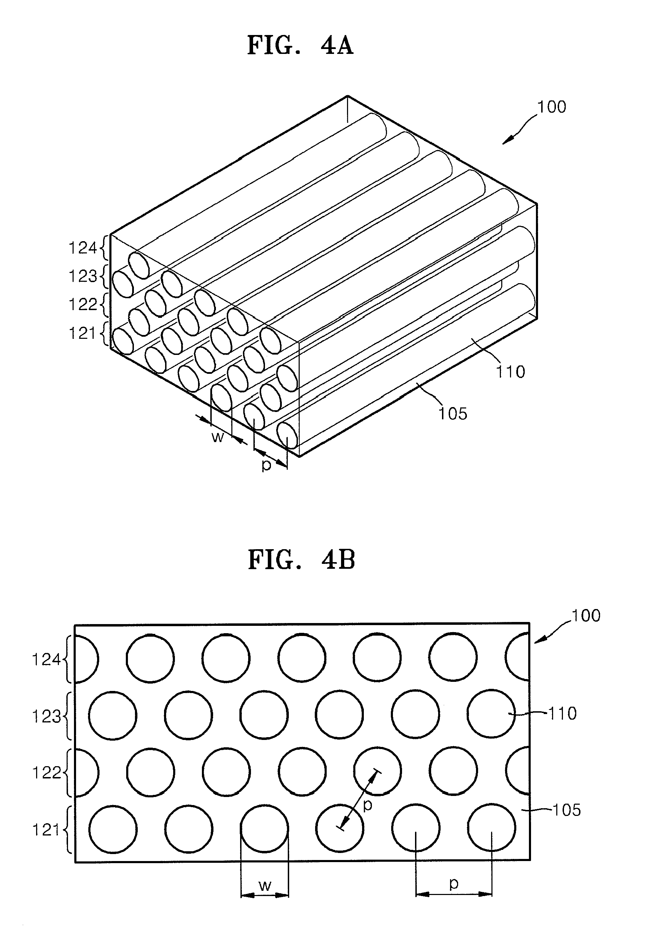

According to an embodiment of the present invention, a nano wire grid polarizer is configured in a structure in which a plurality of nano wire array layers are stacked, each nano wire array layer including nano wires that are periodically arranged in parallel to one another. Referring to FIGS. 4A to 4C, a nano wire grid polarizer 100 is configured in a structure in which a plurality of nano wire array layers are periodically arranged in a dielectric material 105. First through fourth nano wire array layers 121, 122, 123 and 124 are stacked, as illustrated in FIG. 4A. Each of the first through fourth nano wire array layers 121, 122, 123 and 124 includes nano wires 110 periodically arranged and spaced apart from one another in parallel to one another. When the pitch of the nano wires 110 is p, p is less than the wavelength of incident light thereon, the diameter w of each of the nano wires 110 is less than the wavelength of incident light thereon, and the length of each of the nano wires 110 is greater than the wavelength of incident light thereon. In addition, the first through fourth nano wire array layers 121, 122, 123 and 124 are stacked and spaced apart one another.

The nano wires 110 may have various cross-sectional shapes (e.g., a round shape, an oval, or a quadrangle).

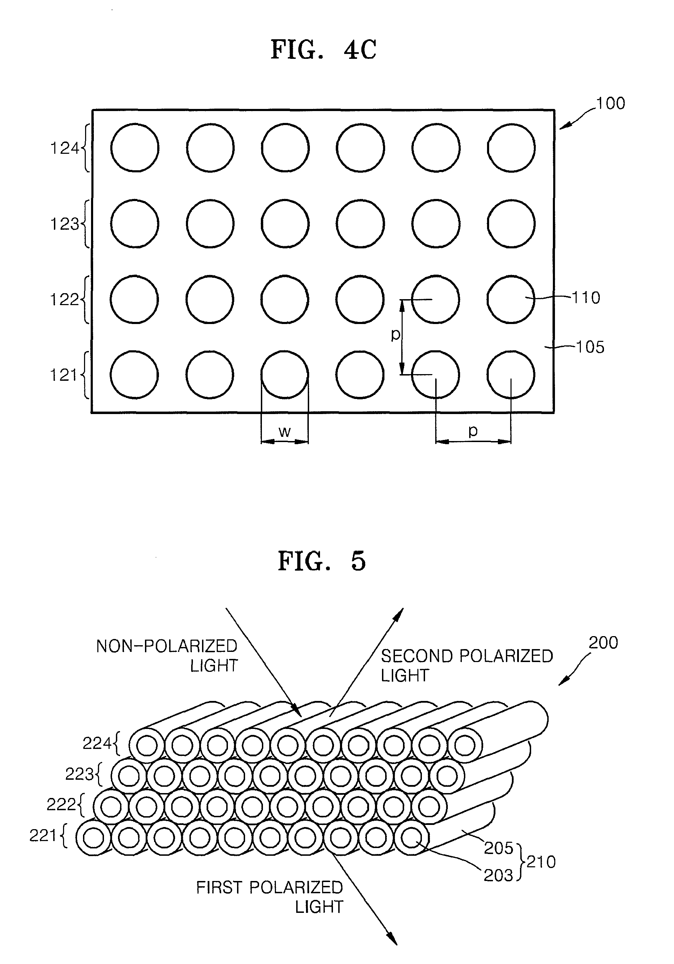

The nano wires 110 are formed of a metal. That is, the nano wires 110 may be formed of any one of aluminum, silver, gold, copper, nickel or the like. As illustrated in FIG. 4B, the first through fourth nano wire array layers 121, 122, 123 and 124 are arranged such that nano wires 110 of the first through fourth nano wire array layers 121, 122, 123 and 124 are offset from each other at a regular interval which is equal to half of the pitch (0.5p) in order of the layers. That is, when the nano wire grid polarizer 100 is cross sectioned perpendicularly to a lengthwise direction of the nano wires 110, the nano wires 110 may be arranged in a periodical triangular lattice. Alternately, as illustrated in FIG. 4C, the nano wires 110 in each of the first through fourth nano wire array layers 121, 122, 123 and 124 may be lengthwise arranged in a row. That is, when the nano wire grid polarizer 100 is cross sectioned perpendicularly to a lengthwise direction of the nano wires 110, the nano wires 110 may be arranged in a periodical tetragonal lattice. In addition, the number and the arrangement of the nano wire array layers may be variously configured, and detailed descriptions of the number and the arrangement of the nano wire array layers will be described later.

Since nano wires can be mass-produced, when a polarizer is manufactured using nano wires, large-area polarizers and mass production can be realized, and additionally, contrast ratio and light efficiency are improved in the case where a plurality of nano wire array layers are staked. Its descriptions will be provided later with reference to exemplary embodiments of the present invention.

FIG. 5 is a perspective view of a nano wire grid polarizer 200 according to another embodiment of the present invention. A plurality of nano wire array layers are stacked, wherein each nano wire array layer is configured in a structure in which core-shell nano wires 210 are periodically arranged, and wherein each core-shell nano wire 210 includes a core 203 and a shell 205 surrounding the core 203. For example, the nano wire grid polarizer 200 may include first through fourth nano wire array layers 221, 222, 223 and 224.

The core 203 may be formed of a metal, for example, any one of aluminum, silver, gold, copper, nickel or the like. The core-shell nano wires 210 may contact one another, or alternatively, may be spaced at predetermined intervals. The shell 205 is formed of a dielectric material, and thus the shell 205 can function as the dielectric material 105 illustrated in FIGS. 4A and 4B. That is, since a plurality of cores 203 are spaced at predetermined intervals due to the shell 205 that is dielectric material, the cores 203 can function as a grid polarizer. A core-shell nano wire may be variously arranged. To make full use of space, for example, when a cross-section of the core-shell nano wires is viewed, the core-shell nano wire may be arranged in a triangular lattice. In addition, when the nano wire array layers are arranged, the core-shell nano wires of each of the nano wire array layers may be lined up in rows.

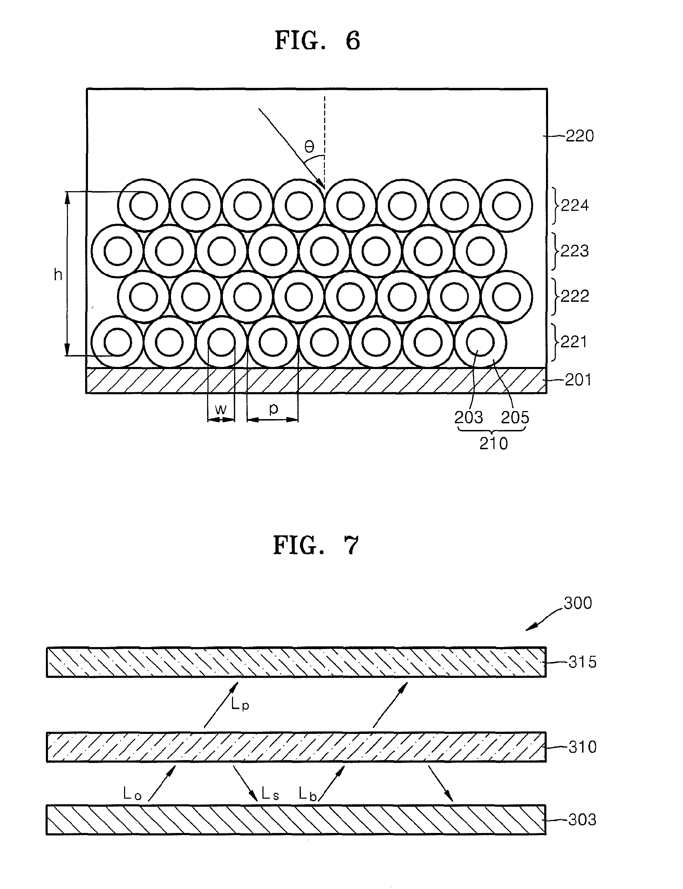

FIG. 6 illustrates a structure in which the core-shell nano wires 210 illustrated in FIG. 5 are arranged in a dielectric material 220. The first through fourth nano wire array layers 221, 222, 223 and 224 are stacked on the substrate 201. An area surrounding the nano wire array layers is filled with the dielectric material 220. The dielectric material 220 prevents the nano wires from being damaged when they are exposed to the outside, and protects the nano wires from physical impacts.

Since an exemplary nano wire grid polarizer according to the present invention can be manufactured using nano wires that can be mass-produced, the production of nano wire grid polarizers can be improved. In addition, since it is not necessary to adjust the interval between adjacent core-shell nano wires when the core-shell nano wires contact one another, the polarizer can be easily manufactured.

A liquid crystal display apparatus can also be manufactured using a nano wire grid polarizer according to an embodiment of the present invention. FIG. 7 is a schematic view of a liquid crystal display apparatus 300 according to an embodiment of the present invention. The liquid crystal display apparatus 300 includes a backlight unit 303 irradiating light and a liquid crystal panel 315 forming an image using the light irradiated from the backlight unit 303. Either of a direct-light type unit and a side-light type unit can be used as the backlight unit 303. With a direct-light type unit, light is irradiated from a light source disposed below the liquid crystal panel 315. With a side-light type unit, the unit includes a light guide plate and a light source disposed on a side surface of the light guide plate. A nano wire grid polarizer 310 is disposed between the backlight unit 303 and the liquid crystal panel 315.

The nano wire grid polarizer 310 may be configured according to any of the embodiments of this invention. While first polarized light (e.g., p-polarized light) is transmitted, the second polarized light (e.g., s-polarized light) is reflected so that most of incident light may be emitted as the first polarized light (e.g., p-polarized light). Thus, the polarization efficiency of the liquid crystal panel 315 is improved.

In particular, the liquid crystal display apparatus may be operated as follows. When non-polarized light Lo passing through the backlight unit 303 is incident on the nano wire grid polarizer 310, the first polarized light Lp is transmitted to be used as a polarization light source of a liquid crystal panel. Meanwhile, the second polarized light Ls is reflected to be returned to the backlight unit 303 to be reused. The performance of the wire grid polarizer is evaluated according to four values such as the transmittance Tp of the first polarized light, the reflectance Rp of the first polarized light, the transmittance Ts of the second polarized light, and the reflectance Rs of the second polarized light. Referring to FIG. 7, light generated by the backlight unit 303 is converted into polarized light useful for the liquid crystal panel 315 at the following efficiency Eff, which is a factor representing light efficiency.

## Equation 1

$$Eff = \frac{0.5Tp}{1-0.5(Rp+Rs)(Rb)}$$ ,

where Rb is a ratio of light that is reflected to be again incident on the nano wire grid polarizer 310 with respect to the light that is reflected by the nano wire grid polarizer 310 to be returned to the backlight unit 303. A value (CR) of Tp divided by Ts is used as another important factor, CR is the factor related to image quality such as the contrast ratio of the entire liquid crystal panel. To get the light efficiency and the contrast ratio CR with respect to the nano wire grid polarizer, for a variety of numbers "L" of the nano wire array layers and values of the diameter "w" of the nano wire divided by the arrangement period "p", changes of the light efficiency and the contrast ratio need to be acquired.

The metal core 203 of the core-shell nano wires 210 may be formed of aluminum. The shell 205 may be formed of a material having refraction index of 1.5. The index of refraction of each of the substrate 201 and the dielectric material 220 may be set as 1.5. As a result, this structure is the same as a structure (see FIG. 4B) in which the metal core 203 is surrounded by a dielectric material having refraction index of 1.5 in a triangular lattice as viewed cross-sectionally. In the structure, while the variables of p, w/p and L are variously changed, the light efficiency and the contrast ratio CR are calculated, and thus a structure can be determined, in which the excellent light efficiency and contrast ratio CR can be realized. Hereinafter, first through fifth examples will be described, and their results will be described referring to a graph. In these examples Eff is calculated while assuming that Rb=0.9 which is chosen as Rb of a common backlight unit is 0.9.

<FIRST EXAMPLE>

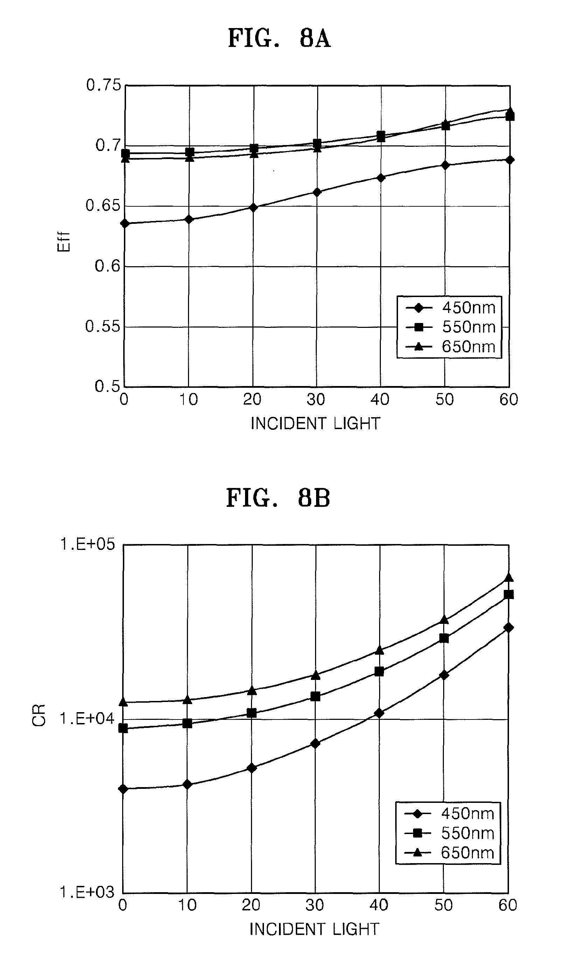

In the first example, L=3, p=50 nm and w/p=0.6. In addition, h=107 nm where h denotes a distance between the top of a core of the highest layer of a plurality of nano wire array layers and the bottom of a core of the lowermost layer of the nano wire array layers. FIGS. 8A and 8B are graphs respectively illustrating the Eff and the CR of the first example with respect to various wavelengths. When an angle of incident light θ is in the range of 0 to 60 degrees, the results of Eff>0.63 and CR>4000 can be obtained. The angle of incident light θ represents a slope of incident light with respect to a normal of the nano wire grid polarizer, as illustrated in FIG.6.

<SECOND EXAMPLE>

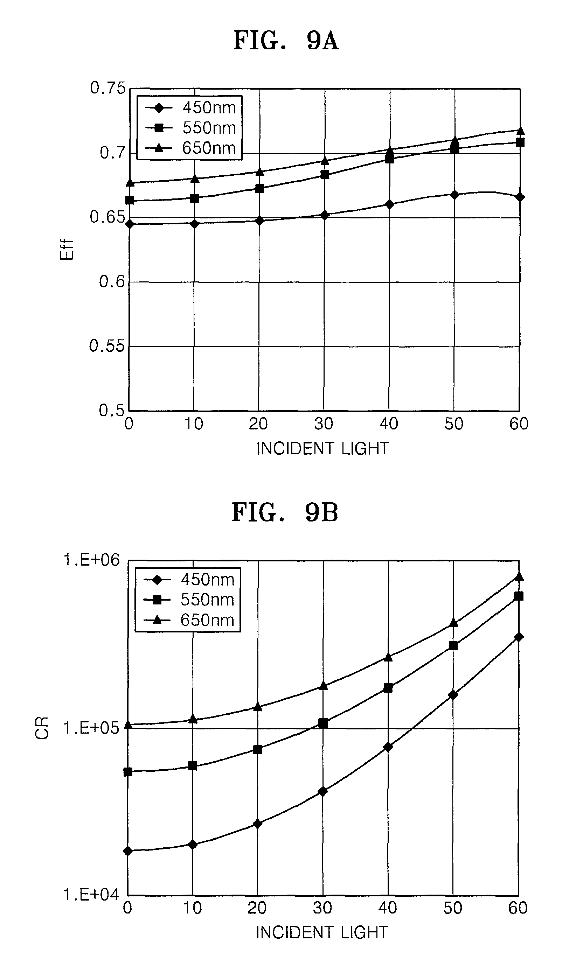

In the second example, L=4, p=60 nm, w/p=0.5 and h=186 nm. FIGS. 9A and 9B are graphs respectively illustrating Eff and CR of the second example. The results of Eff>0.64 and CR>18000 can be obtained with respect to an angle of incident light in the range of 0 to 60 degrees.

<THIRD EXAMPLE>

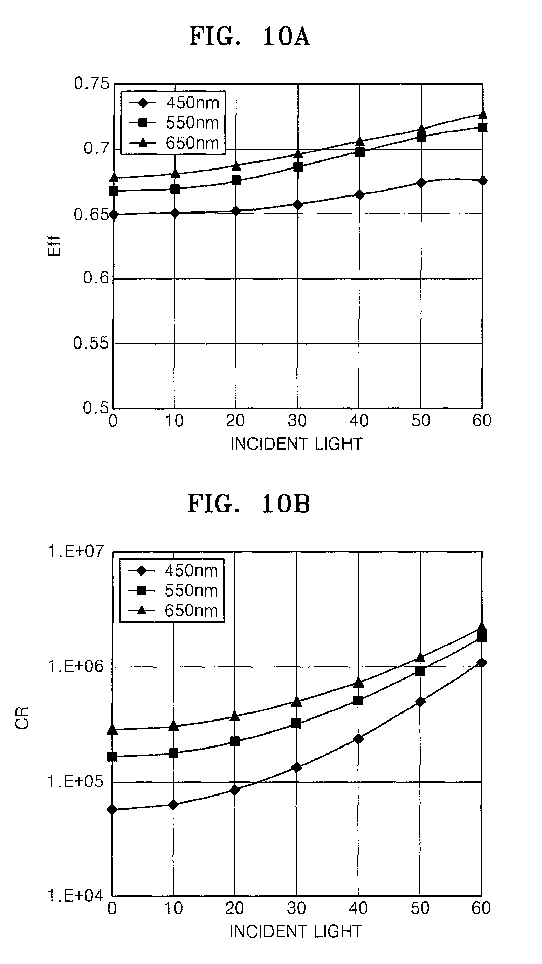

In the third example, L=6, p=40 nm, w/p=0.5 and h=193 nm. FIGS. 10A and 10B are graph respectively illustrating Eff and CR of the third example. The results of Eff>0.65 and CR>58000 can be obtained with respect to an angle of incident in the range of 0 to 60 degrees.

<FOURTH EXAMPLE>

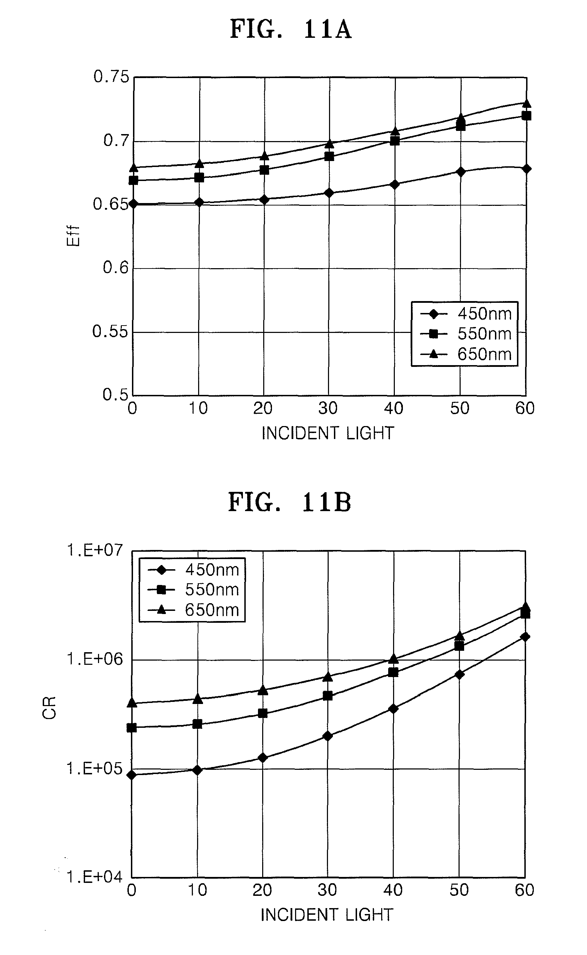

In the fourth example, L=8, p=30 nm, w/p=0.5 and h=197 nm. FIGS. 11A and 11B are graphs respectively illustrating Eff and CR of the fourth example. The results of Eff>0.65 and CR>88000 can be obtained with respect to an angle of incident in the range of 0 to 60 degrees.

<FIFTH EXAMPLE>

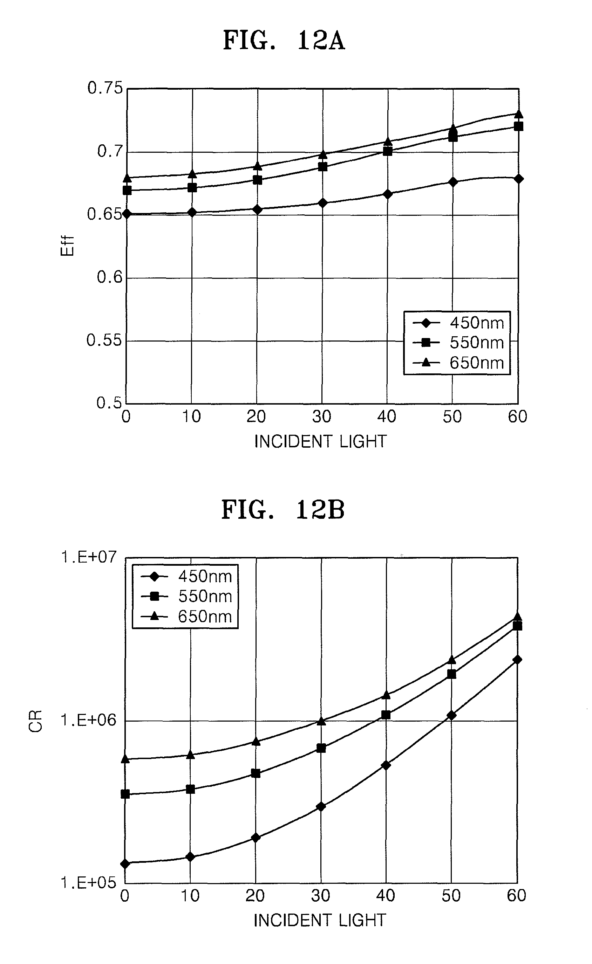

In the fifth example, L=12, p=20 nm, w/p=0.5 and h=200 nm. FIGS. 12A and 12B are graphs respectively illustrating Eff and CR of the fifth example. The results of Eff>0.65 and CR>130000 can be obtained with respect to an angle of incident in the range of 0 to 60 degrees.

Summarizing the above examples, when L, p and w are changed, the effect on Eff is hardly changed. On the other hand, CR is increased when L is increased and p is reduced. In that a related art wire grid polarizer illustrated in FIG. 2 has values of Eff>0.63 and CR>2600, the light efficiency of each of the above examples is almost similar or is a higher value than the related art wire grid polarizer, but the contrast ratio CR of each of the above examples is much higher. To determine the values of L, p and w at which a WGP has good performance, Eff and CR were determined and are shown respectively in Tables 2 and 3, for L=3, p=30 to 80 nm, and w/p=0.4 to 0.8.

TABLE 2

| Eff of the case of L=3 | | | | | | |
|---|---|---|---|---|---|---|
| | | w/p | | | | |
| H(nm) | p(nm) | 0.4 | 0.5 | 0.6 | 0.7 | 0.8 |
| 82 | 30 | 0.66 | 0.70 | 0.70 | 0.66 | 0.51 |
| 96 | 35 | 0.68 | 0.71 | 0.70 | 0.64 | 0.44 |
| 109 | 40 | 0.68 | 0.71 | 0.69 | 0.60 | 0.39 |
| 123 | 45 | 0.68 | 0.70 | 0.66 | 0.55 | 0.36 |
| 137 | 50 | 0.68 | 0.69 | 0.64 | 0.51 | 0.36 |
| 150 | 55 | 0.68 | 0.68 | 0.61 | 0.49 | 0.35 |
| 164 | 60 | 0.67 | 0.66 | 0.59 | 0.49 | 0.30 |
| 178 | 65 | 0.66 | 0.65 | 0.58 | 0.49 | 0.22 |
| 191 | 70 | 0.65 | 0.64 | 0.58 | 0.46 | 0.15 |
| 205 | 75 | 0.65 | 0.63 | 0.57 | | |
| 219 | 80 | 0.64 | 0.63 | 0.55 | | |

TABLE 3

| CR of the case of L=3 | | | | | | |
|---|---|---|---|---|---|---|
| | | w/p | | | | |
| H(nm) | p(nm) | 0.4 | 0.5 | 0.6 | 0.7 | 0.8 |
| 82 | 30 | 9.0E+00 | 3.7E+01 | 1.6E+02 | 6.8E+02 | 2.4E+03 |
| 96 | 35 | 1.4E+01 | 7.4E+01 | 3.9E+02 | 2.1E+03 | 6.8E+03 |
| 109 | 40 | 2.2E+01 | 1.4E+02 | 9.3E+02 | 5.5E+03 | 2.0E+04 |
| 123 | 45 | 3.2E+01 | 2.6E+02 | 2.0E+03 | 1.3E+04 | 6.9E+04 |
| 137 | 50 | 4.6E+01 | 4.5E+02 | 4.0E+03 | 3.2E+04 | 2.7E+05 |
| 150 | 55 | 6.3E+01 | 7.3E+02 | 7.6E+03 | 8.1E+04 | 1.1E+06 |
| 164 | 60 | 8.2E+01 | 1.1E+03 | 1.4E+04 | 2.2E+05 | 3.4E+06 |
| 178 | 65 | 1.0E+02 | 1.7E+03 | 2.7E+04 | 6.0E+05 | 6.9E+06 |
| 191 | 70 | 1.2E+02 | 2.4E+03 | 5.2E+04 | 1.5E+06 | 1.2E+07 |
| 205 | 75 | 1.4E+02 | 3.5E+03 | 9.8E+04 | | |
| 219 | 80 | 1.6E+02 | 4.9E+03 | 1.7E+05 | | |

Referring to Tables 2 and 3, when w/p=0.5 to 0.7, and h>96 nm, relatively good performance of Eff>0.6 and CR>1000 is realized. In addition, Eff and CR were determined and are respectively shown in Tables 4 and 5 for L=6, p=15 to 80 m and w/p=0.3 to 0.7. When w/p=0.4 to 0.6, and h=107 to 400 nm, good performance of Eff>0.6 and CR>1000 is realized.

TABLE 4

| Eff of the case of L=6 | | | | | | |
|---|---|---|---|---|---|---|
| | | w/p | | | | |
| H(nm) | p(nm) | 0.3 | 0.4 | 0.5 | 0.6 | 0.7 |
| 80 | 15 | 0.58 | 0.66 | 0.70 | 0.70 | 0.66 |
| 107 | 20 | 0.60 | 0.68 | 0.71 | 0.69 | 0.59 |
| 133 | 25 | 0.61 | 0.68 | 0.69 | 0.64 | 0.54 |
| 160 | 30 | 0.60 | 0.67 | 0.67 | 0.61 | 0.53 |
| 187 | 35 | 0.60 | 0.66 | 0.65 | 0.61 | 0.50 |
| 213 | 40 | 0.59 | 0.66 | 0.65 | 0.59 | 0.44 |
| 240 | 45 | 0.58 | 0.65 | 0.64 | 0.55 | 0.41 |
| 267 | 50 | 0.57 | 0.64 | 0.61 | 0.52 | 0.40 |
| 293 | 55 | 0.56 | 0.63 | 0.59 | 0.51 | 0.36 |
| 320 | 60 | 0.53 | 0.62 | 0.58 | 0.50 | 0.00 |
| 346 | 65 | 0.53 | 0.61 | 0.58 | 0.46 | |
| 373 | 70 | 0.52 | 0.61 | 0.56 | 0.42 | |
| 400 | 75 | 0.51 | 0.60 | 0.52 | | |
| 426 | 80 | 0.50 | 0.58 | | | |

TABLE 5

| CR of the case of L=6 | | | | | | |
|---|---|---|---|---|---|---|
| h(nm) | p(nm) | w/p | | | | |
| | | 0.3 | 0.4 | 0.5 | 0.6 | 0.7 |
| 80 | 15 | 2.9E+00 | 1.0E+01 | 4.6E+01 | 2.0E+02 | 8.8E+02 |
| 107 | 20 | 4.8E+00 | 3.0E+01 | 2.2E+02 | 1.5E+03 | 8.6E+03 |
| 133 | 25 | 7.8E+00 | 8.3E+01 | 9.8E+02 | 9.5E+03 | 7.7E+04 |
| 160 | 30 | 1.2E+01 | 2.2E+02 | 3.9E+03 | 5.8E+04 | 8.9E+05 |
| 187 | 35 | 1.8E+01 | 5.3E+02 | 1.5E+04 | 3.8E+05 | 8.9E+06 |
| 213 | 40 | 2.4E+01 | 1.3E+03 | 5.8E+04 | 2.2E+06 | 6.3E+07 |
| 240 | 45 | 3.2E+01 | 2.8E+03 | 2.0E+05 | 1.1E+07 | 5.1E+08 |
| 267 | 50 | 3.8E+01 | 5.7E+03 | 6.0E+05 | 4.7E+07 | 4.6E+09 |
| 293 | 55 | 4.2E+01 | 1.0E+04 | 1.7E+06 | 2.3E+08 | 3.1E+10 |
| 320 | 60 | 4.8E+01 | 1.7E+04 | 4.5E+06 | 9.8E+08 | |
| 346 | 65 | 3.9E+01 | 2.7E+04 | 1.1E+07 | 3.2E+09 | |
| 373 | 70 | 3.4E+01 | 4.0E+04 | 2.5E+07 | 9.7E+09 | |
| 400 | 75 | 2.8E+01 | 5.2E+04 | 4.5E+07 | | |
| 426 | 80 | 2.2E+01 | 5.7E+04 | | | |

Considering the results of the first through fifth examples and Tables 2 through 5, a nano wire grid polarizer can be designed so that w/p may be in the range of 0.4 to 0.7 and h may be in the range of 96 to 400 nm, in order to obtain good Eff and CR. However, by changing L, p and w, desired optical characteristics such as contrast ratio CR and Eff can be obtained.

As described above, the nano wire grid polarizer according to exemplary embodiments of the present invention can be manufactured using nano wires that can be mass-produced, and thus the production of nano wire grid polarizers can be improved. In addition, by stacking a plurality of nano wire array layers, each nano wire array layer including nano wires periodically arranged, good light efficiency and contrast ratio can be obtained.

In addition, a liquid crystal display apparatus according to exemplary embodiments of the present invention forms an image using a nano wire grid polarizer according to an embodiment of the present invention, and thus the production and the polarization efficiency of the liquid crystal display apparatus can be improved.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A nano wire grid polarizer which transmits incident light having a first polarization and reflects incident light having a second polarization, the polarizer comprising:

   a dielectric layer;
   a plurality of nano wire array layers, each of the plurality of nano wire array layers comprising a plurality of nano wires which are disposed in parallel to each other and spaced at regular intervals,
   wherein the plurality of nano wire array layers are stacked.

2. A nano wire grid polarizer according to claim 1 wherein the plurality of nano wire array layers are stacked at regular intervals.

3. The polarizer of claim 2, wherein the nano wires are each formed of metal.

4. The polarizer of claim 3, wherein the nano wires are each formed of any one selected from a group consisting of aluminum, silver, gold, copper and nickel.

5. The polarizer of claim 1, wherein a ratio of a diameter of each of the nano wires and a period of spacing of the nano wires is in a range of 0.4 to 0.7.

6. The polarizer of claim 1, wherein a distance between a bottom of a lowermost layer of the plurality of wire array layers and a top of a highest layer of the plurality of wire array layers is in a range of 96 nm to 400 nm.

7. A nano wire grid polarizer according to any preceding claim wherein:

   the polarizer further comprises a substrate;
   each of the plurality of nano wire array layers comprises a plurality of core-shell nano wires disposed in parallel to each other and spaced at regular intervals, wherein each of the plurality of core-shell nano wires comprises a wire core and a shell surrounding the wire core.

8. The polarizer of claim 7, wherein the wire cores are formed of a metal.

9. The polarizer of claim 8, wherein the core-shell nano wires are each formed of any one selected from the group consisting of aluminum, silver, gold, copper and nickel.

10. The polarizer of any of claims 7, 8 or 9, wherein the shells are formed of a dielectric material.

11. The polarizer of any of claims 7 to 10, wherein a ratio of an outer diameter of each wire and an outer diameter of each shell is in a range of 0.4 to 0.7.

12. The polarizer of any of claims 7 to 11, wherein a distance between a bottom of a core of a lowermost layer of the plurality of core-shell nano wire array layers and a top of a core of the highest layer of the plurality of core-shell nano wire array layers is in a range of 96 nm to 400 nm.

13. The polarizer of any preceding claim, wherein the nano wires are arranged in one of a periodical triangular lattice and a periodical tetragonal lattice when viewed cross-sectionally.

14. The polarizer of any preceding claim, wherein the nano wires each have a cross-sectional shape of one of a circle, an oval, and a quadrangle.

15. A liquid crystal display apparatus comprising:

a nano wire grid polarizer according to any preceding claim which transmits light having a first polarization and reflects light having a second polarization;
a backlight which emits light;
a liquid crystal panel which forms an image using light transmitted by the nano wire grid polarizer.

## FIG. 1A (RELATED ART)

## FIG. 1B (RELATED ART)

SECOND
POLARIZED LIGHT

FIRST
POLARIZED LIGHT

# FIG. 2 (RELATED ART)

## FIG. 3A (RELATED ART)

## FIG. 3B (RELATED ART)

# FIG. 4A

# FIG. 4B

# FIG. 4C

# FIG. 5

## FIG. 6

## FIG. 7

## FIG. 8A

## FIG. 8B

# FIG. 9A

# FIG. 9B

## FIG. 10A

## FIG. 10B

## FIG. 11A

Eff vs INCIDENT LIGHT

Legend:
- 450nm
- 550nm
- 650nm

## FIG. 11B

CR vs INCIDENT LIGHT

Legend:
- 450nm
- 550nm
- 650nm

## FIG. 12A

## FIG. 12B

EP 1 980 900 A1

**European Patent Office**

**EUROPEAN SEARCH REPORT**

Application Number

EP 08 15 2763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINLIANG YAN ET AL: "Polarizer Made of Anodic Alumina Film" COMMUNICATIONS, CIRCUITS AND SYSTEMS PROCEEDINGS, 2006 INTERNATIONAL C ONFERENCE ON, IEEE, PI, 1 June 2006 (2006-06-01), pages 1950-1954, XP031010802 ISBN: 978-0-7803-9584-8 * page 1950 - page 1952; figures 1,3 * | 1-15 | INV. G02F1/1335 ADD. G02B5/30 |
| Y | * the whole document * | 15 | |
| X | EP 1 411 377 A (EASTMAN KODAK CO [US] MOXTEK INC [US]) 21 April 2004 (2004-04-21) * abstract; figures 5a-5f,11a,11b,11c * * paragraphs [0003], [0015], [0021], [0032], [0033], [0036], [0037], [0040], [0041], [0052] - [0055], [0062] - [0068] * | 1-15 | |
| Y | | 7 | |
| P,Y | EP 1 840 603 A (TORAY INDUSTRIES [JP]) 3 October 2007 (2007-10-03) * paragraph [0035]; figures 4b,5 * | 7,15 | |
| Y | WO 2006/064693 A (TORAY INDUSTRIES [JP]; TAKAHASHI HIROMITSU [JP]; AOYAMA SHIGERU [JP];) 22 June 2006 (2006-06-22) * paragraph [0035]; figures 4b,5 * | 7,15 | |
| A | US 2004/045932 A1 (KOCHERGIN VLADIMIR [US] ET AL) 11 March 2004 (2004-03-11) * paragraphs [0123], [0124], [0138]; figures 4,20 * | 1-15 | |

| | | |
|---|---|---|
| | **TECHNICAL FIELDS SEARCHED (IPC)** | |
| | G02B G02F | |

The present search report has been drawn up for all claims

| Place of search | Date of completion of the search | Examiner |
|---|---|---|
| Munich | 11 June 2008 | Blau, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

## ANNEX TO THE EUROPEAN SEARCH REPORT
## ON EUROPEAN PATENT APPLICATION NO.

EP 08 15 2763

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2008

| Patent document cited in search report | | Publication date | Patent family member(s) | | Publication date |
|---|---|---|---|---|---|
| EP 1411377 | A | 21-04-2004 | CA | 2438741 A1 | 15-04-2004 |
| | | | CN | 1497273 A | 19-05-2004 |
| | | | JP | 2004280050 A | 07-10-2004 |
| | | | US | 6665119 B1 | 16-12-2003 |
| | | | US | 2004070829 A1 | 15-04-2004 |
| EP 1840603 | A | 03-10-2007 | CN | 101080656 A | 28-11-2007 |
| | | | WO | 2006064693 A1 | 22-06-2006 |
| | | | KR | 20070095878 A | 01-10-2007 |
| WO 2006064693 | A | 22-06-2006 | CN | 101080656 A | 28-11-2007 |
| | | | EP | 1840603 A1 | 03-10-2007 |
| | | | KR | 20070095878 A | 01-10-2007 |
| US 2004045932 | A1 | 11-03-2004 | NONE | | |

EPO FORM P0459

For more details about this annex : see Official Journal of the European Patent Office, No. 12/82